(19) Europäisches Patentamt
European Patent Office
Office européen des brevets

(11) **EP 3 117 182 B1**

(12) **EUROPÄISCHE PATENTSCHRIFT**

(45) Veröffentlichungstag und Bekanntmachung des Hinweises auf die Patenterteilung:
**17.06.2020 Patentblatt 2020/25**

(21) Anmeldenummer: **15701295.6**

(22) Anmeldetag: **27.01.2015**

(51) Int Cl.:
**G01C 19/5726** *(2012.01)* **G01C 25/00** *(2006.01)*

(86) Internationale Anmeldenummer:
**PCT/EP2015/000151**

(87) Internationale Veröffentlichungsnummer:
**WO 2015/135614 (17.09.2015 Gazette 2015/37)**

(54) **VERFAHREN ZUM OPTIMIEREN DER EINSCHALTZEIT EINES CORIOLISKREISELS SOWIE DAFÜR GEEIGNETER CORIOLISKREISEL**

METHOD OF OPTIMISING THE STARTUP TIME OF A CORIOLIS GYRO AND CORIOLIS GYRO SUITABLE FOR IT

PROCÉDÉ POUR OPTIMER LE TEMPS DE DÉMARRAGE D'UN GYROSCOPE CORIOLIS ET GYROSCOPE CORIOLIS À CET EFFET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.03.2014 DE 102014003640**

(43) Veröffentlichungstag der Anmeldung:
**18.01.2017 Patentblatt 2017/03**

(73) Patentinhaber: **Northrop Grumman LITEF GmbH 79115 Freiburg (DE)**

(72) Erfinder: **GEIGER, Wolfram 72116 Mössingen (DE)**

(74) Vertreter: **Müller Hoffmann & Partner Patentanwälte mbB St.-Martin-Strasse 58 81541 München (DE)**

(56) Entgegenhaltungen:
**EP-A2- 2 060 871      EP-A2- 2 533 011
DE-A1-102005 034 702    US-A1- 2011 179 868**

## EP 3 117 182 B1

**Beschreibung**

Die Erfindung betrifft ein Verfahren zum Optimieren der Einschaltzeit eines Corioliskreisels sowie einen dafür geeigneten Corioliskreisel.

Corioliskreisel (Vibrationskreisel, Vibrationsgyro-skop, Drehratensensoren) umfassen ein einteiliges, in der Regel jedoch ein mehrteiliges Massensystem, das in Schwingungen versetzt wird. Dazu wird zum Betrieb des Corioliskreisels ein erster Schwingungsmode (Anregungsschwingung) des Massensystems angeregt. Wird der Corioliskreisel einer Drehbewegung in seiner sensitiven Achse unterworfen, so regen die auftretenden Corioliskräfte einen zweiten Schwingungsmode des Massensystems an, der direkt oder indirekt erfasst wird, wobei ein den zweiten Schwingungsmode (Ausleseschwingung oder Detektionsschwingung) abbildendes Auslesesignal gewonnen wird. Das Auslesesignal wird auf Änderungen in der Amplitude hin ausgewertet, die ein Maß für die am Corioliskreisel anliegende Drehrate darstellt. In einem Corioliskreisel nach einem closed-loop-System wird über einen Regelkreis die Amplitude der Ausleseschwingung fortlaufend auf einen festen Wert, beispielsweise 0, zurückgestellt, so dass die anliegende Drehrate aus den dazu erforderlichen Rückstellkräften abgeleitet wird. Damit ist das Auslesesignal im closed-loop-Betrieb proportional zur Corioliskraft $F_C$, während im openloop-Betrieb das Auslesesignal proportional zur Amplitude der Detektionsschwingung ist.

Wird ein Corioliskreisel erstmals oder erneut (Reset) eingeschaltet, so hat die Amplitude der Anregungsschwingung zum Einschaltzeitpunkt t=0 einen Wert von 0 und wird danach auf einen vordefinierten Wert der Anregungsschwingung eingestellt. Dabei kann die Einschwingzeit der Amplitude der Anregungsschwingung größer als 0,1 s sein, während die Messdauer für die Bestimmung des Auslesesignals wesentlich kleiner, beispielsweise nur 10 ms, sein kann. Insbesondere beim Einschalten des Corioliskreisels unter einer hohen Drehrate, beispielsweise von 1000 °/s, kann das Auslesesignal beziehungsweise der Kreisel-Skalenfaktor sehr schnell mit einer hinreichenden Genauigkeit ermittelt werden. Da in der Einschaltzeit jedoch die Amplitude der Anregungsschwingung noch nicht ihren eingeschwungenen Wert erreicht hat, kann das vom Corioliskreisel ausgegebene Ausgangssignal einen "falschen" Wert darstellen, der die geforderten Spezifikationen des Corioliskreisels nicht erfüllt.

Eine Möglichkeit zur Lösung dieses Problems stellt die Optimierung der Bandbreite des Hauptreglers der Ausleseeinheit dar. Eine weitere Möglichkeit zur Lösung des Problems ist das Bereitstellen einer ausreichenden Kraftreserve, so dass beim Einschalten das Massensystem im ersten Schwingungsmode mit Kräften angeregt wird, die deutlich über den unter Normalbedingungen erforderlichen Kräften liegen.

Die EP 2 060 871 A2 offenbart Techniken, mit denen sich das Anhaften von beweglichen Elektroden an feststehende Elektroden in einem Trägheitssensor verhindern lassen, wodurch Fehlfunktionen des Trägheitssensors verhindert werden. Hierzu werden eine bewegliche Elektrode, eine feststehende Elektrode, die der beweglichen Elektrode gegenüberliegt, ein umlaufender Leiter, der sowohl der beweglichen als auch der feststehenden Elektrode gegenüberliegt, sowie Demodulations- und Spannungsanpassungsschaltkreise bereitgestellt, die das elektrische Potential des umlaufenden Leiters derart einstellen, dass es gleich dem elektrischen Potential der beweglichen Elektrode wird. Hierbei wird die Kapazitätsänderung zwischen der beweglichen und der feststehenden Elektrode gemessen.

Die US 2011/179868 A1 offenbart ein Sensorsystem, in dem ein Sensor betrieben wird und das ein physikalisches Signal aus einem Sensorsignal bestimmt. Ein AD-Wandler-Schaltkreis wandelt ein Überwachungssignal und das Sensorsignal in digitale Signale um. Ein Phasenanpassungsschaltkreis stellt die Phasendifferenz zwischen dem digitalen Überwachungssignal und dem digitalen Sensorsignal ein. Ein Detektionsschaltkreis detektiert das physikalische Signal durch Multiplikation des digitalen Überwachungssignals mit dem digitalen Sensorsignal nach der Einstellung der Phasendifferenz durch den Phasenanpassungsschaltkreis.

Die DE 10 2005 034702 A1 offenbart ein Verfahren zur Inbetriebnahme eines mindestens ein zu einer mechanischen Schwingungsbewegung anregbares Schwingerelement umfassenden Drehratensensors, bei dem zur Betriebsregelung des Drehratensensors ein der momentanen Geschwindigkeit oder Auslenkung des Schwingerelements proportionales Signal verstärkt, und als Antriebssignal zum Antrieb des Schwingerelements verwendet wird, wobei während des Einschaltvorgangs des Drehratensensors die Verstärkung der Amplitude des Antriebssignals auf einen konstanten, voreinstellbaren Wert festgelegt wird, wobei die Anregungsfrequenz des Antriebssignals im Wesentlichen kontinuierlich von einem Startwert unterhalb der Hauptresonanzfrequenz der Schwingungsbewegung bis zu einem Endwert oberhalb der Hauptresonanzfrequenz und unterhalb einer Nebenresonanzfrequenz angehoben wird, und gleichzeitig die Auslenkung und/oder die Geschwindigkeit des Schwingerelements beobachtet wird, um die Hauptresonanzfrequenz der Schwingungsbewegung zu bestimmen, wobei nach dem Erreichen des Endwerts und der Bestimmung der Hauptresonanzfrequenz die Anregungsfrequenz des Antriebssignals auf die Hauptresonanzfrequenz gesetzt, und die Betriebsregelung der Amplitude und der Anregungsfrequenz des Antriebssignals freigegeben wird. Drüber hinaus wird eine Schaltungsanordnung zur Durchführung des Verfahrens beschrieben.

Die EP 2 533 011 A2 offenbart ein Verfahren zur Normierung von Ausgangssignalen eines Corioliskreisels während der Einschaltzeit, bei dem die Amplitude der Anregungsschwingung und das Ausgangssignal kontinuierlich ermittelt werden.

Die der Erfindung zugrunde liegende Aufgabe ist es, ein einfaches und mit anderen Maßnahmen zur Optimierung der Einschaltzeit kombinierbares Verfahren zur Normierung von Ausgangssignalen eines Corioliskreisels sowie einen dafür geeigneten Corioliskreisel bereitzustellen.

Diese Aufgabe wird erfindungsgemäß durch ein Verfahren und durch einen Corioliskreisel entsprechend den unabhängigen Ansprüchen gelöst. Vorteilhafte Weiterbildungen ergeben sich aus den abhängigen Ansprüchen.

Das erfindungsgemäße Verfahren zur Normierung von Ausgangssignalen eines Corioliskreisels mit einem Massensystem, das zu einer Anregungsschwingung des Corioliskreisels parallel zu einer ersten Achse anregbar ist, wobei eine Auslenkung des Massensystems aufgrund einer Corioliskraft entlang einer zweiten Achse, die senkrecht zu der ersten Achse vorgesehen ist, mittels eines Ausgangssignals des Corioliskreisels nachweisbar ist, umfasst das Ermitteln der Amplitude der Anregungsschwingung des Corioliskreisels zu einem definierten Zeitpunkt, das Ermitteln des Ausgangssignals des Corioliskreisels zum definierten Zeitpunkt und das Erzeugen eines normierten Ausgangssignals des Corioliskreisels durch Multiplikation des ermittelten Ausgangssignals mit dem Quotienten aus der Amplitude der Anregungsschwingung des Corioliskreisels im eingeschwungenen Zustand und der ermittelten Amplitude.

In einer Ausführungsform werden die Schritte zum Ermitteln der Amplitude, zum Ermitteln des Ausgangssignals und zum Erzeugen des normierten Ausgangssignals für mindestens einen weiteren definierten Zeitpunkt wiederholt.

Gemäß einer Ausführungsform wird mindestens einer der definierten Zeitpunkte mittels eines Zeitmessers als erreicht definiert.

Erfindungsgemäß wird die Amplitude der Anregungsschwingung des Corioliskreisels kontinuierlich ermittelt. Mindestens einer der definierten Zeitpunkte wird als erreicht definiert, wenn die ermittelte Amplitude der Anregungsschwingung einen jeweils vorgegebenen Wert erreicht hat.

Gemäß einer Ausführungsform wird das Verfahren beendet, wenn die ermittelte Amplitude der Amplitude der Anregungsschwingung des Corioliskreisels im eingeschwungenen Zustand entspricht.

Gemäß einer anderen Ausführungsform wird das Verfahren nach Erreichen eines vorgegebenen Zeitpunktes beendet.

Ein erfindungsgemäßer Corioliskreisel umfasst ein Massensystem, das zu einer Anregungsschwingung des Corioliskreisels parallel zu einer ersten Achse anregbar ist, wobei eine Auslenkung des Massensystems aufgrund einer Corioliskraft entlang einer zweiten Achse, die senkrecht zu der ersten Achse vorgesehen ist, mittels eines Ausgangssignals des Corioliskreisels nachweisbar ist. Darüber hinaus umfasst der Corioliskreisel eine Auslesevorrichtung, die eine erste Detektionseinheit, eine zweite Detektionseinheit und eine Ausgabeeinheit umfasst. Die erste Detektionseinheit ist geeignet, die Amplitude der Anregungsschwingung des Corioliskreisels zu einem definierten Zeitpunkt zu ermitteln, während die zweite Detektionseinheit geeignet ist, das Ausgangssignal des Corioliskreisels zum definierten Zeitpunkt zu ermitteln. Die Ausgabeeinheit ist geeignet, ein normiertes Ausgangssignal des Corioliskreisels durch Multiplikation des ermittelten Ausgangssignals mit dem Quotienten aus der Amplitude der Anregungsschwingung des Corioliskreisels im eingeschwungenen Zustand und der ermittelten Amplitude zu erzeugen.

Gemäß einer Ausführungsform umfasst der Corioliskreisel weiterhin einen Zeitmesser, der geeignet ist, einen weiteren definierten Zeitpunkt als erreicht zu definieren.

Erfindungsgemäß umfasst der Corioliskreisel eine Vergleichseinheit, die geeignet ist, die ermittelte Amplitude mit einem vorgegebenen Wert zu vergleichen.

Die Erfindung wird im Folgenden unter Bezugnahme auf die begleitenden Figuren in beispielhaften Ausführungsformen näher erläutert.

Die Figur 1 zeigt schematisch das erfindungsgemäße Verfahren zur Optimierung der Einschaltzeit eines Corioliskreisels.

Die Figur 2 zeigt eine schematische Darstellung einer Ausführungsform des Verfahrens zum Optimieren der Einschaltzeit eines Corioliskreisels, wobei definierte Zeitpunkte durch einen Zeitmesser ermittelt werden.

Die Figur 3 zeigt eine schematische Darstellung des erfindungsgemäßen Verfahrens zum Optimieren der Einschaltzeit eines Corioliskreisels, bei dem die definierten Zeitpunkte durch den Vergleich einer kontinuierlich ermittelten Amplitude mit einem jeweils vorgegebenen Wert ermittelt werden.

Die Figur 4 zeigt eine schematische Darstellung eines Corioliskreisels als zweiteiliger Einzelschwinger gemäß einer Ausführungsform der Erfindung.

Die Figur 5 zeigt eine schematische Darstellung eines Corioliskreisels als zweiteiliger Einzelschwinger gemäß einer weiteren Ausführungsform der Erfindung.

Im Allgemeinen wird bei einem Corioliskreisel der Proportionalitätsfaktor zwischen der Corioliskraft und der Drehrate als Skalenfaktor bezeichnet, der proportional zur Amplitude der Anregungsschwingung ist. Dabei gilt:

$$F_C = 2m\dot{x}\Omega \qquad (1),$$

wobei für die Ableitung der Auslenkung x der Anregungsschwingung die folgende Formel gilt:

$$\dot{x} = \frac{d}{dt}(x) = \frac{d}{dt}(A(t)\sin \omega t) = \frac{d}{dt}(A(t))\sin \omega t + A(t)\frac{d}{dt}(\sin \omega t) \qquad (2).$$

Dabei sind $F_C$ die Corioliskraft, m die Masse des Detektionsschwingers, x die Auslenkung der Anregungsschwingung, $\Omega$ die Winkelgeschwindigkeit oder Drehrate (das heißt die Messgröße), A(t) die Amplitude der Auslenkung der Anregungsschwingung und $\omega$ die Betriebsfrequenz der Anregungsschwingung, die vorteilhaft der Resonanzfrequenz des Anregeschwingers entspricht.

Die Anregungsschwingung des Corioliskreisels ist dabei die Schwingung, zu der das Massensystem des Corioliskreisels parallel zu einer ersten Achse (x-Achse) angeregt wird. Die Masse m des Detektionsschwingers in Formel (1) ist die Masse des Massensystems, die aufgrund der Corioliskraft entlang einer zweiten Achse (y-Achse) zu einer Detektionsschwingung angeregt wird. Das Massensystem des Corioliskreisels kann als ein einteiliges oder als ein mehrteiliges Massensystem ausgebildet sein. Beispielsweise kann das Massensystem zwei Teilmassen (Schwinger) umfassen, die miteinander über ein Federsystem gekoppelt sind und Relativbewegungen zueinander ausführen können. Bei einem solchen mehrteiligen Massensystem wird als Masse m des Detektionsschwingers in Formel (1) nur die Masse der Teilmasse eingesetzt, die entlang der zweiten Achse schwingt.

Wird der Corioliskreisel zum Zeitpunkt t=0 aus einem Ruhezustand eingeschaltet, das heißt, dass A(t=0) einen Wert von 0 hat, so kann nach einem bis zehn Prozent (1%-10%) der Einschwingzeit der Amplitude der Anregungsschwingung in Formel (2) die Ableitung der Amplitude A(t) nach der Zeit bei den folgenden typischen Werten vernachlässigt werden: bei einer Einschwingzeit der Amplitude A(t) von größer als 0,1 s und einer Betriebsfrequenz der Anregungsschwingung $\omega = 2\pi \cdot 1\,0000\mathrm{s}^{-1}$.

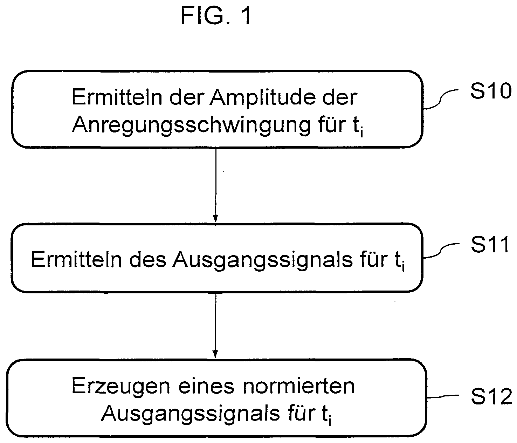

Figur 1 zeigt schematisch das erfindungsgemäße Verfahren zum Optimieren der Einschaltzeit eines Corioliskreisels.

Dabei wird für einen definierten Zeitpunkt $t_i$ die Amplitude $A(t_i)$ der Anregungsschwingung sowie das Ausgangssignal $S(t_i)$ des Corioliskreisels für den definierten Zeitpunkt $t_i$ ermittelt (Schritte S10 und S11). Das Ausgangssignal S ist das Auslesesignal des Corioliskreisel. Das Ausgangssignal S des Corioliskreisels kann in einer bereits verarbeiteten Form vorliegen. Beispielsweise kann das Auslesesignal bereits mithilfe von Analog/Digital-Wandlern, Demodulatoren und/oder anderen Komponenten bearbeitet worden sein, um beispielsweise Temperatureinflüsse zu kompensieren.

Im Schritt S12 wird für den definierten Zeitpunkt $t_i$ ein normiertes Ausgangssignal $S_0(t_i)$ erzeugt, indem das ermittelte Ausgangssignal $S(t_i)$ durch die ermittelte Amplitude $A(t_i)$ geteilt und mit der Amplitude $A_0$ der Anregungsschwingung im eingeschwungenen Zustand multipliziert wird. Die Amplitude AO der Anregungsschwingung im eingeschwungenen Zustand ist dabei aus einem Kalibrationsvorgang oder durch eine Vorgabe an einen Closed-Loop-Regler für die Amplitude bekannt. Damit ergibt sich das normierte auszugebende Ausgangssignal $S_0(t_i)$ gemäß der folgenden Formel:

$$S_0(t_i) = \frac{A_0}{A(t_i)} S(t_i) \qquad (3).$$

Mit Hilfe dieser Normierung kann für einen definierten Zeitpunkt $t_i$, der innerhalb der Einschwingzeit der Anregungsschwingung liegt, ein gültiges Ausgangssignal, das die Spezifikationen erfüllt, erzeugt werden. Prinzipiell kann das Verfahren auch für definierte Zeitpunkte $t_i$, die außerhalb der Einschwingzeit liegen, ausgeführt werden.

Das in Figur 1 dargestellte Verfahren zum Optimieren der Einschaltzeit kann für nur einen definierten Zeitpunkt $t_i$ innerhalb der Einschwingzeit der Anregungsschwingung ausgeführt werden oder auch für mehrere definierte Zeitpunkte $t_i$ mit i=1 bis n, wobei einer, mehrere oder alle der definierten Zeitpunkte $t_i(i=1..n)$ innerhalb der Einschwingzeit der Anregungsschwingung liegen können.

Nach dem Ende der Einschwingzeit der Anregungsschwingung kann das Verfahren zum Erzeugen eines normierten Ausgangssignals wieder weggelassen werden, so dass vom Corioliskreisel ein ermitteltes Ausgangssignal S(t) ausgegeben wird. Dies entspricht dem normalen Detektionsvorgang des Corioliskreisels.

Zum Bestimmen des oder der definierten Zeitpunkte $t_i$ können zwei Möglichkeiten genutzt werden. Einerseits kann einer oder mehrere der definierten Zeitpunkte $t_i$ zeitlich vorgegeben und mit Hilfe eines Zeitmessers ermittelt werden, andererseits kann einer oder mehrere der definierten Zeitpunkte als erreicht definiert werden, wenn die Amplitude der Anregungsschwingung einen jeweils vorgegebenen Wert erreicht hat.

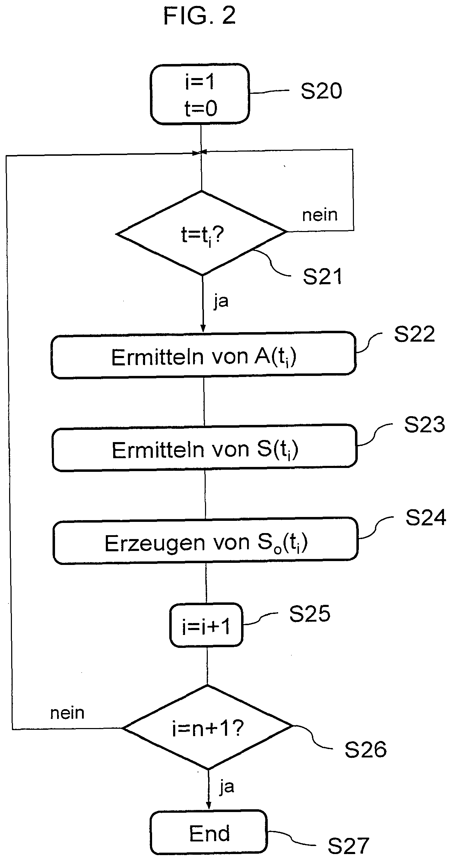

Figur 2 zeigt eine schematische Darstellung einer Ausführungsform des erfindungsgemäßen Verfahrens zum Optimieren der Einschaltzeit eines Corioliskreisels, bei dem definierte Zeitpunkte mittels eines Zeitmessers als erreicht definiert werden. Dabei sind bestimmte Zeitwerte $t_i$ mit i=1 bis n vorgegeben und entsprechen bestimmten Zeitpunkten innerhalb und gegebenenfalls auch außerhalb der Einschwingzeit der Anregungsschwingung. Beispielsweise kann $t_i$ einem Zeitpunkt entsprechen, zu dem die Amplitude der Auslenkung der Anregungsschwingung circa 10% ihres eingeschwungenen Wertes $A_0$, der zum Beispiel 10 $\mu$m betragen kann, erreicht hat. Weitere vorgegebene Zeitpunkte $t_i$ können beispielsweise den Zeitpunkten, zu denen die Amplitude der Auslenkung der Anregungsschwingung circa 50% beziehungsweise circa 90% ihres eingeschwungenen Wertes $A_0$ erreicht hat, entsprechen. Der letzte Wert $t_n$ kann beispielsweise einem Zeitpunkt entsprechen, zu dem die Amplitude der Auslenkung der Anregungsschwingung ihren eingeschwungenen Wert $A_0$ erreicht hat. Die vorgegebenen Zeitpunkte $t_1$ bis $t_n$ können dabei auf Erfahrungswerten oder Berechnungen des Einschwingvorganges der Anregungsschwingung beruhen. Die einzelnen Zeitpunkte $t_i$ können dabei gleichmäßig oder ungleichmäßig über die Einschwingzeit der Anregungsschwingung verteilt sein.

Als Startwerte für das Verfahren gemäß Figur 2 wird in einem ersten Schritt S20 der Index i auf 1 und die Zeit t beim Einschalten des Corioliskreisels auf 0 gesetzt. Mittels eines Zeitmessers wird die seit t=0, das heißt seit dem Einschalten des Corioliskreisels, verstrichene Zeit t gemessen, wobei die gemessene Zeit t mit einem vorgegebenen Wert für $t_i$, beispielsweise $t_1$, verglichen wird (Schritt S21). Ist der vorgegebene Wert $t_i$ erreicht, so wird für diesen Zeitpunkt $t_i$ die Amplitude $A(t_i)$ sowie das Ausgangssignal $S(t_i)$ des Corioliskreisels ermittelt (Schritte S22 und S23). In Schritt S24 wird unter Verwendung der ermittelten Amplitude $A(t_i)$ und des Ausgangssignals $S(t_i)$ das normierte Ausgangssignal $S_0(t_i)$ gemäß Formel (3) erzeugt und ausgegeben. Danach wird i um 1 erhöht (Schritt S25) und im Schritt S26 überprüft, ob i den Maximalwert n+1 erreicht hat. Wenn dies der Fall ist, so wird das Verfahren im Schritt S27 beendet, während andernfalls die Schritte S21 bis S26 wiederholt werden. Als Zeitmesser, der die Zeit misst, kann beispielsweise eine Uhr oder ein mit einem Zähler verbundener Taktgeber genutzt werden.

Alternativ zum Messen der Zeit und Vergleichen mit einem vorgegebenen Wert kann in Schritt S21 auch ein durch einen Taktgeber vorgegebener Takt, das heißt das Umschaltereignis eines Signals, für die Entscheidung, ob ein definierter Zeitpunkt $t_i$ erreicht ist oder nicht, genutzt werden. In diesem Fall sind die zeitlichen Abstände zwischen einzelnen definierten Zeitpunkten $t_i$ stets gleich.

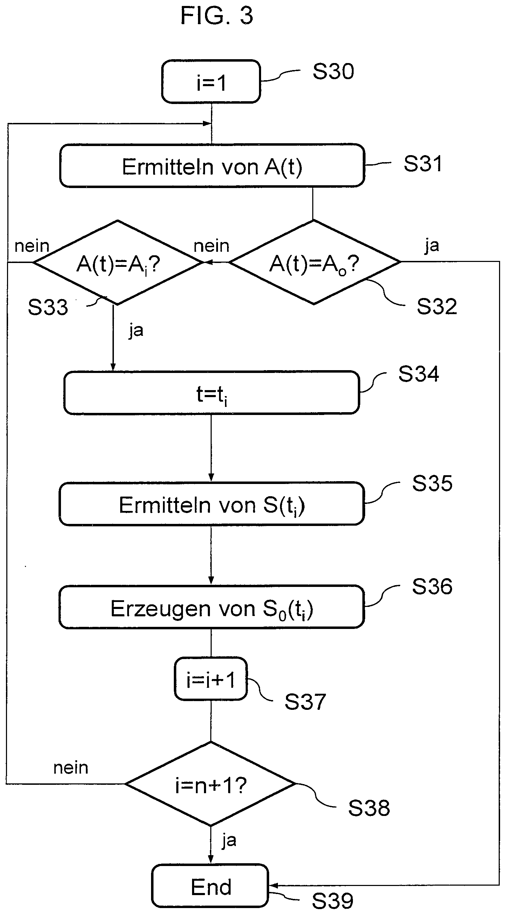

In Figur 3 ist das erfindungsgemäße Verfahren zum Optimieren der Einschaltzeit eines Corioliskreisels schematisch dargestellt, wobei die definierten Zeitpunkte $t_i$ über die Messung der Amplitude $A(t)$ der Anregungsschwingung bestimmt werden. Das heißt, dass die Amplitude $A(t)$ der Anregungsschwingung kontinuierlich ermittelt und mit vorgegebenen Werten verglichen wird, wobei der Zeitpunkt t, an dem die Amplitude $A(t)$ einen vorgegebenen Wert $A_i$ erreicht hat, als definierter Zeitpunkt $t_i$ festgelegt wird.

Zunächst wird in Schritt S30 ähnlich wie in Schritt S20 in Figur 2 der Index i auf 1 gesetzt, während jedoch die Zeit t nicht bestimmt oder festgelegt werden muss. In Schritt S31 wird die Amplitude $A(t)$ ermittelt, die nachfolgend mit der eingeschwungenen Amplitude $A_0$ der Anregungsschwingung verglichen wird (Schritt S32). Hat die Amplitude $A(t)$ bereits den Wert $A_0$ erreicht, so kann das Verfahren im Schritt S39 direkt beendet werden. Hat die Amplitude $A(t)$ der Anregungsschwingung noch nicht den Wert $A_0$ erreicht, so wird in Schritt S33 die Amplitude mit einem vorgegebenen Wert $A_i$, beispielsweise $A_1$, verglichen. Ist der Wert $A_i$ noch nicht erreicht, so werden die Schritte S31 bis S33 so lange wiederholt, bis die Amplitude $A(t)$ den Wert $A_i$ erreicht hat. Hat die Amplitude $A(t)$ den vorgegebenen Wert $A_i$ erreicht, so wird in Schritt S34 der Zeitpunkt t, für den $A(t)=A_i$ gilt, als der definierte Zeitpunkt $t_i$ definiert, wobei der Zeitpunkt t beziehungsweise die vergangene Zeit dabei nicht real bestimmt werden muss. Anschließend wird das Ausgangssignal $S(t_i)$ in Schritt S35 ermittelt und in Schritt S36 das normierte Ausgangssignal $S_0(t_i)$ erzeugt, ähnlich wie dies bereits mit Bezug auf die Schritte S23 und S24 in Figur 2 beschrieben wurde. Nachfolgend wird in Schritt S37 der Index i um 1 erhöht und in Schritt S38 mit dem Wert n+1 verglichen. Hat der Index i den Wert n+1 erreicht, so wird das Verfahren in Schritt S39 beendet. Ist der Wert n+1 noch nicht erreicht, so werden die Schritte S31 bis S38 wiederholt.

Der Schritt S38 kann auch weggelassen werden, so dass nach Schritt S37 die Schritte S31 bis S37 solange wiederholt werden, bis in Schritt S32 festgestellt wird, dass die Amplitude $A(t)$ der Amplitude $A_0$ im eingeschwungenen Zustand entspricht. Alternativ kann auch der Schritt S32 weggelassen werden, so dass die Schritte S31 und S33 bis S37 bis zum Erreichen von i=n+1 wiederholt werden, wobei gegebenenfalls die Amplitude $A(t)$ auch bereits den Wert $A_0$ erreicht haben kann.

Im erfindungsgemäßen Verfahren (Figur 2) wird die Amplitude $A(t)$ der Anregungsschwingung kontinuierlich, das heißt nicht nur bei Erreichen eines definierten Zeitpunktes $t_i$, gemessen oder bestimmt. Ebenso kann auch das Ausgabesignal $S(t)$ kontinuierlich ermittelt werden. Dann ist es möglich, auch das normierte Ausgabesignal $S_0(t)$ kontinuierlich zu erzeugen. Dabei kann beispielsweise der Normierungsfaktor $A_0/A(t)$ zu den definierten Zeitpunkten $t_i$ berechnet werden, so dass $S_0(t)$ für Zeitpunkte t mit $t_1<t<t_{i+1}$ mit dem Normierungsfaktor $A_0/A(t_i)$ erzeugt wird.

Generell sollten die definierten Zeitpunkte $t_i$ so gewählt sein, dass der Abstand zwischen zwei aufeinander folgenden Zeitpunkten $t_i$ und $t_{i+1}$ größer oder gleich der Messdauern für die Amplitude $A(t)$, das Ausgangssignal $S(t)$ oder die Zeit t ist, wobei die längste Messdauer ausschlaggebend ist.

Beispielsweise können einer oder mehrere der definierten Zeitpunkte, zum Beispiel der erste definierte Zeitpunkt $t_1$, mittels eines Zeitmessers als erreicht definiert werden, während ein oder mehrere andere der definierten Zeitpunkte, zum Beispiel der letzte definierte Zeitpunkt $t_n$, mithilfe der gemessen Amplitude $A(t)$ und deren Vergleich mit einem vorgegebenen Wert $A_i$ ermittelt werden.

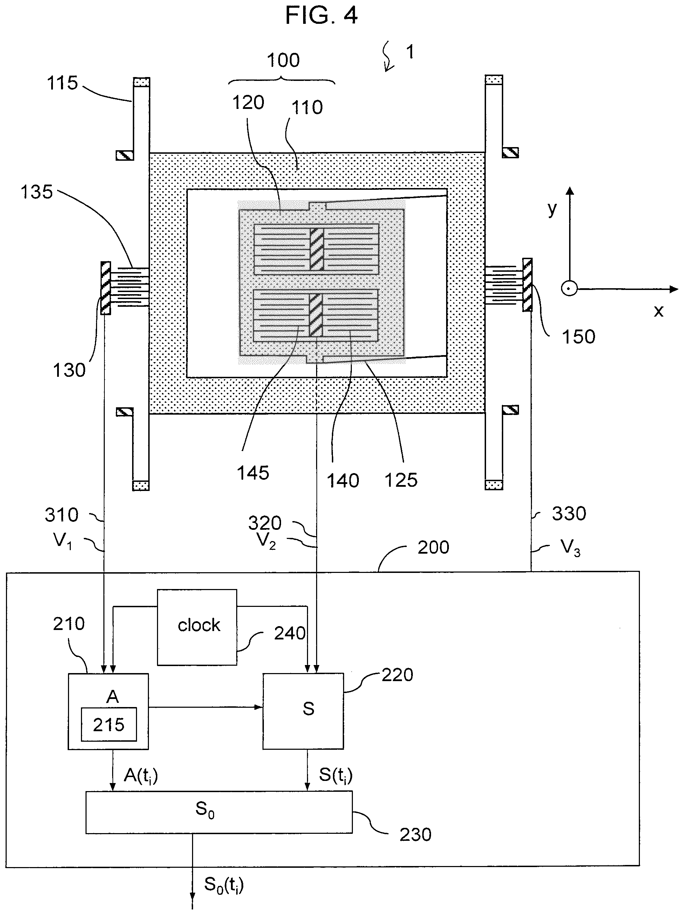

Figur 4 zeigt schematisch einen für die Ausführung des erfindungsgemäßen Verfahrens geeigneten Corioliskreisel in einer spezifischen Ausführungsform. Der Corioliskreisel 1 umfasst dabei ein Massensystem 100 und eine Auslesevorrichtung 200, die mit dem Massensystem über Signalleitungen 310, 320, 330 verbunden ist.

Das Massensystem 100 umfasst in der in Figur 4 dargestellten Ausführungsform eine erste Teilmasse 110, die einen Antriebsrahmen darstellt, und eine zweite Teilmasse 120, die als Detektionsmasse dient. Jedoch können die Funktionen der beiden Teilmassen auch durch eine einstückige Masse realisiert werden. Die erste Teilmasse 110 ist über erste Federelemente 115 auf einem Substrat verankert und kann mit Hilfe von feststehenden Anregungselektroden 130, die fest mit dem Substrat verbunden sind, und von beweglichen Anregungselektroden 135, die fest mit der ersten Teilmasse 110 verbunden sind, zu einer Schwingung entlang einer ersten Achse (x-Achse) angeregt werden. Dazu wird an die feststehenden Anregungselektroden 130 eine Wechselspannung U(t) angelegt (nicht dargestellt). Die zweite Teilmasse 120 ist mittels zweiter Federelemente 125 mit der ersten Teilmasse 110 verbunden, so dass sie aufgrund einer auf das Massensystem 100 wirkenden Corioliskraft entlang einer zweiten Achse (y-Achse) auslenkbar ist. Die zweite Achse steht dabei senkrecht zu der ersten Achse. Über bewegliche Ausleseelektroden 140, die fest mit der zweiten Teilmasse 120 verbunden sind, und feststehende Ausleseelektroden 145, die fest mit dem Substrat verbunden sind, kann die Auslenkung der zweiten Teilmasse 120 mittels eines Auslesesignals nachgewiesen werden.

In der in Figur 4 dargestellten Ausführungsform sind die feststehenden Anregungselektroden 130 über eine erste Signalleitung 310 mit der Auslesevorrichtung 200 verbunden, wodurch ein erstes Signal $V_1$ übertragen werden kann. Das erste Signal $V_1$ kann beispielsweise eine Amplitude der Anregungsschwingung der ersten Teilmasse 110 beinhalten.

Das erste Signal $V_1$ kann aber auch ein Signal sein, das über verschiedene Verarbeitungsschritte die Ermittlung der Amplitude der Anregungsschwingung ermöglicht. In Figur 4 ist damit der Fall dargestellt, dass die Bereitstellung der Anregungsschwingung sowie die Auslesung der aktuellen Amplitude A der Anregungsschwingung über dieselben Elektroden, das heißt über die Anregungselektroden 130 und 135, erfolgt. Dabei wird die Tatsache genutzt, dass alle Signale überlagert werden.

Der Übersichtlichkeit halber ist in Figur 4 nur die Auslesung des ersten Signals $V_1$ dargestellt, nicht aber die Antriebsfunktion, die die Schwingung anregt. Zudem muss die erste Signalleitung 310 nicht notwendigerweise mit den feststehenden Anregungselektroden 130 verbunden sein. Beispielsweise können ein oder mehrere separate Elektrodenpaare, von denen ein Teil fest mit dem Substrat und ein anderer Teil fest mit der ersten Teilmasse 110 verbunden sind, zur Detektion der Anregungsschwingung, das heißt der aktuellen Amplitude der Anregungsschwingung, eingesetzt werden und mit der Signalleitung 310 verbunden sein. Auch eine optische Detektion der Amplitude der Anregungsschwingung ist denkbar. In jedem Fall wird ein erstes Signal $V_1$ erhalten und über die Signalleitung 310 an die Auslesevorrichtung 200 übermittelt.

Der Corioliskreisel 1 umfasst weiterhin eine zweite Signalleitung 320, über die ein zweites Signal $V_2$ an die Auslesevorrichtung 200 übertragen werden kann. Die zweite Signalleitung 320 ist in der in Figur 4 dargestellten Ausführungsform mit den feststehenden Ausleseelektroden 145 fest verbunden. Jedoch kann das zweite Signal $V_2$ auch über eine anders geartete Detektion der Bewegung der zweiten Teilmasse 120 erhalten werden, so dass die zweite Signalleitung 320 nicht notwendigerweise mit den feststehenden Ausleseelektroden 145 verbunden sein muss. Das zweite Signal $V_2$ ist das Auslesesignal des Corioliskreisels 1.

Darüber hinaus kann der Corioliskreisel eine oder mehrere weitere Signalleitungen, zum Beispiel eine dritte Signalleitung 330, umfassen, über die beispielsweise ein drittes Signal $V_3$ zwischen der Ausleseeinheit 200 und dem Massensystem 100 übertragen werden kann. Beispielsweise kann die dritte Signalleitung 330 mit einer weiteren Elektrode 150 verbunden sein, die beispielsweise der Korrektur von Fehlern dient.

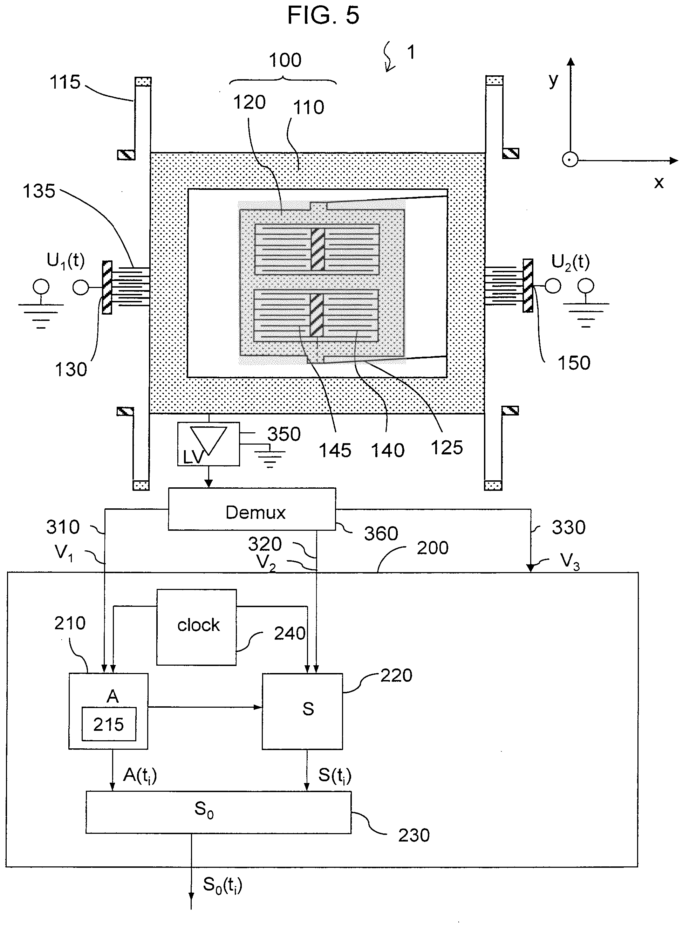

Gemäß einer in Figur 5 dargestellten Ausführungsform werden Spannungen $U_1(t)$ und $U_2(t)$ zum Antreiben des Anregeschwingers und indirekt zum Detektieren dessen mechanischer Schwingung angelegt. Die Spannungen werden zwischen den Klemmen der feststehenden Anregungselektrode 130 und Masse, bzw. zwischen der weiteren Elektrode 150 und Masse angelegt. Die Probemasse, bestehend aus den leitend verbundenen Anrege- und Ausleseschwingern wird über einen Ladungsverstärker 350 stets auf virtueller Masse gehalten. Die Spannungen $U_1$ und $U_2$ werden zur Erzeugung der Signale $V_1$ und $V_3$ angelegt. Um das Signal $V_2$ über den Ladungsverstärker 350 zu erhalten, liegt analog zu den Spannungen $U_1$ und $U_2$ eine Spannung an den zugehörigen Elektroden 140, 145 im Inneren des Ausleseschwingers an (nicht gezeigt).

Am Ausgang des Ladungsverstärkers 350 entsteht ein Abbild der mit zeitabhängigen Kapazitäten gewichteten Spannungssumme aller zeitveränderlichen Spannungen zwischen Elektroden 130, 150 und Probemasse. Zur Trennung der Teilsignale wird ein Demultiplexer 360 bereitgestellt. Das Demultiplexen kann dadurch erreicht werden, dass zur Detektion in bestimmten Zeitintervallen nur an bestimmte Elektroden eine konstante Spannung angelegt und dann im Vorzeichen invertiert wird. Dies ergibt zwei Abtastwerte, die voneinander abgezogen werden und eine skalierte Form der mechanischen Bewegung des Anrege- und/oder des Ausleseschwinger wiedergeben.

Gemäß der Ausführungsform der Figur 5 sind die Signale $V_1$, $V_2$ und $V_3$ also Auslesesignale der mit Spannungen skalierten Veränderung der Kapazitäten und damit der mechanischen Bewegungen.

Die Auslesevorrichtung 200 umfasst eine erste Detektionseinheit 210, eine zweite Detektionseinheit 220 und eine Ausgabeeinheit 230. Die erste Detektionseinheit 210 ist geeignet, aus dem ersten Signal $V_1$ die Amplitude $A(t_i)$ der Anregungsschwingung des Corioliskreisels 1 zu einem definierten Zeitpunkt $t_i$ zu ermitteln. Die zweite Detektionseinheit 220 ist geeignet, aus dem zweiten Signal $V_2$ das Ausgangssignal $S(t_i)$ zum definierten Zeitpunkt $t_i$ zu ermitteln. Die Ausgabeeinheit 230 ist geeignet, ein normiertes Ausgangssignal $S_0(t_i)$ des Corioliskreisels zum definierten Zeitpunkt $t_i$ durch die Multiplikation des von der zweiten Detektionseinheit 220 ermittelten Ausgangssignals $S(t_i)$ mit dem Quotienten aus der Amplitude $A_0$ der Anregungsschwingung im eingeschwungenen Zustand und der von der ersten Detektionseinheit 210 ermittelten Amplitude $A(t_i)$ zu erzeugen. Damit kann die Auslesevorrichtung 200 des Corioliskreisels 1 ein normiertes Ausgangssignal $S_0$ ausgeben, das auch in der Einschaltphase des Corioliskreisels 1 die für gültige Daten geforderten Spezifikationen erfüllt.

Jedoch kann das normierte Ausgangssignal $S_0$ auch noch für weitere Signalverarbeitungen genutzt werden, deren Endergebnis dann ein Ausgangssignal des Corioliskreisels darstellt. Dazu kann die Auslesevorrichtung 200 oder der Corioliskreisel 1 weitere Komponenten umfassen. Beispielsweise kann die Auslesevorrichtung 200 Komponenten zur Kompensation von Temperatureinflüssen auf das Ausgangssignal des Corioliskreisels enthalten.

Wie bereits mit Bezug auf das erfindungsgemäße Verfahren beschrieben, ist die erste Detektionseinheit 210 so ausgestaltet und kann die zweite Detektionseinheit 220 so ausgestaltet sein, dass die Amplitude $A(t)$ der Anregungsschwingung oder die Amplitude $A(t)$ und das Ausgangssignal $S(t)$ kontinuierlich ermittelt werden. Dann können sowohl die Amplitude $A(t)$ als auch das Ausgangssignal $S(t)$ kontinuierlich an die Ausgabeeinheit 230 weitergeleitet und in dieser verarbeitet werden. Jedoch ist es auch möglich, dass die Werte des Ausgangssignals $S(t_i)$ nur zum definierten Zeitpunkt $t_i$ an die Ausgabeeinheit 230 weitergeleitet und verarbeitet werden.

Wie mit Bezug auf die Ausführungsform des erfindungsgemäßen Verfahrens beschrieben, können definierte Zeitpunkte $t_i$ mittels eines Zeitmessers als erreicht definiert werden. Daher kann die Auslesevorrichtung 200 weiterhin einen Zeitmesser 240, beispielsweise eine Uhr oder einen Taktgeber umfassen. Sie umfasst erfindungsgemäß eine Vergleichseinheit 215.

Dabei definiert der Zeitmesser 240 einen Zeitpunkt t als den definierten Zeitpunkt $t_i$, wenn die vergangene Zeit einen vorgegebenen Wert erreicht hat oder wenn ein Taktsignal erkannt wird. Damit sind die so definierten Zeitpunkte $t_i$ nicht von einer gemessenen Amplitude $A(t)$ der Anregungsschwingung abhängig. Wird ein definierter Zeitpunkt $t_i$ durch den Zeitmesser 240 als erreicht erkannt oder definiert, so veranlasst der Zeitmesser 240 die erste Detektionseinheit 210 zum Ermitteln der Amplitude $A(t_i)$ und die zweite Detektionseinheit 220 zum Ermitteln des Ausgangssignals $S(t_i)$.

Obwohl in den in den Figuren 4 und 5 dargestellten Ausführungsformen die Auslesevorrichtung 200 einen Zeitmesser 240 umfasst, kann ein zeitlich definiertes Signal zum Ermitteln der Amplitude $A(t_i)$ und des Ausgangssignals $S(t_i)$ auch von einer Komponente außerhalb der Auslesevorrichtung 200 oder sogar außerhalb des Corioliskreisels 1 erzeugt und an die erste Detektionseinheit 210 und die zweite Detektionseinheit 220 übermittelt werden.

Die Vergleichseinheit 215 dient dem Vergleichen einer von der ersten Detektionseinheit 210 kontinuierlich ermittelten Amplitude $A(t)$ der Anregungsschwingung mit einem vorgegebenen Wert $A_i$. Stellt die Vergleichseinheit 215 fest, dass ein vorgegebener Wert $A_i$ erreicht ist, so wird der dazugehörige Zeitpunkt als definierter Zeitpunkt $t_i$ erkannt oder definiert und die zweite Detektionseinheit 220 zum Ermitteln des Ausgangssignals $S(t_i)$ veranlasst. Der Wert $A(t)=A(t_i)=A_i$ wird darüber hinaus an die Ausgabeeinheit 230 weitergeleitet und wie beschrieben bei der Erzeugung des normierten Ausgangssignals $S_0(t_i)$ genutzt.

In den Figuren 4 und 5 ist die Vergleichseinheit 215 als Bestandteil der ersten Detektionseinheit 210 dargestellt. Jedoch kann die Vergleichseinheit 215 auch außerhalb der ersten Detektionseinheit 210, oder auch außerhalb der Auslesevorrichtung angeordnet sein, solange sie geeignet ist, die erste Detektionseinheit 210 zum Übermitteln des Amplitudenwertes $A(t_i)$ an die Ausgabeeinheit 230 und die zweite Detektionseinheit 220 zum Ermitteln des Wertes des Ausgangssignals $S(t_i)$ und zum Übermitteln dieses Wertes an die Ausgabeeinheit 230 zu veranlassen.

Das erfindungsgemäße Verfahren und der dafür geeignete Corioliskreisel ermöglichen bereits während der Einschaltzeit des Corioliskreisels eine Einschätzung über die Güte des Skalenfaktors beziehungsweise des Ausgangssignals des Corioliskreisels. Damit lässt sich abschätzen, ob im regulären Betrieb, das heißt bei eingeschwungener Anregungsschwingung, der gewünschte Skalenfaktor erreicht werden wird und damit der Corioliskreisel die geforderten Spezifikationen erfüllen und wie gewünscht funktionieren wird. Damit muss nicht eine Worst-Case-Zeit abgewartet werden, um zu entscheiden, ob das Ausgangssignal des Corioliskreisels ausreichend genau ist. Dies führt zu einer deutlichen Reduzierung der Einschaltzeit eines Corioliskreisels, beispielsweise um den Faktor 100. Darüber hinaus sind das Verfahren und die dafür notwendigen Komponenten des Corioliskreisels einfach implementierbar und mit anderen Maßnahmen zur Optimierung der Einschaltzeit kombinierbar.

**Patentansprüche**

**1.** Verfahren zur Normierung von Ausgangssignalen eines Corioliskreisels (1) mit einem Massensystem (100), das zu einer Anregungsschwingung des Corioliskreisels (1) parallel zu einer ersten Achse (x) anregbar ist, wobei eine Auslenkung des Massensystems aufgrund einer Corioliskraft entlang einer zweiten Achse (y), die senkrecht zu der ersten Achse (x) vorgesehen ist, mittels eines Ausgangssignals (S) des Corioliskreisels (1) nachweisbar ist, umfassend:

Ermitteln der Amplitude (A) der Anregungsschwingung des Corioliskreisels (1) zu einem definierten Zeitpunkt ($t_i$), Ermitteln des Ausgangssignals (S) des Corioliskreisels (1) zum definierten Zeitpunkt ($t_i$), und
Erzeugen eines normierten Ausgangssignals ($S_0$) des Corioliskreisels (1) durch Multiplikation des ermittelten Ausgangssignals (S) mit dem Quotienten aus der Amplitude ($A_0$) der Anregungsschwingung des Corioliskreisels (1) im eingeschwungenen Zustand und der ermittelten Amplitude (A),
wobei
die Amplitude (A) der Anregungsschwingung des Corioliskreisels (1) kontinuierlich ermittelt wird, **dadurch gekennzeichnet, dass**
der definierte Zeitpunkt ($t_i$) als erreicht definiert wird, wenn die ermittelte Amplitude (A) der Anregungsschwingung einen jeweils vorgegebenen Wert ($A_i$) erreicht hat.

2. Verfahren nach Anspruch 1, weiterhin umfassend
Wiederholen der Schritte zum Ermitteln der Amplitude (A), zum Ermitteln des Ausgangssignals (S) und zum Erzeugen des normierten Ausgangssignals ($S_0$) für mindestens einen weiteren definierten Zeitpunkt ($t_{i+1}$).

3. Verfahren nach Anspruch 1,
**dadurch gekennzeichnet, dass**
das Verfahren beendet wird, wenn die ermittelte Amplitude (A) der Amplitude ($A_0$) der Anregungsschwingung des Corioliskreisels (1) im eingeschwungenen Zustand entspricht.

4. Verfahren nach einem der vorherigen Ansprüche,
**dadurch gekennzeichnet, dass**
das Verfahren nach Erreichen eines vorgegebenen Zeitpunktes ($t_n$) beendet wird.

5. Corioliskreisel (1), umfassend:

ein Massensystem (100), das zu einer Anregungsschwingung des Corioliskreisels (1) parallel zu einer ersten Achse (x) anregbar ist, wobei eine Auslenkung des Massensystems aufgrund einer Corioliskraft entlang einer zweiten Achse (y), die senkrecht zu der ersten Achse (x) vorgesehen ist, mittels eines Ausgangssignals (S) des Corioliskreisels (1) nachweisbar ist,
eine Auslesevorrichtung (200), die eine erste Detektionseinheit (210), eine zweite Detektionseinheit (220) und eine Ausgabeeinheit (230) umfasst, wobei

die erste Detektionseinheit (210) ausgestaltet ist, die Amplitude (A) der Anregungsschwingung des Corioliskreisels (1) zu einem definierten Zeitpunkt ($t_i$) zu ermitteln,
die zweite Detektionseinheit (220) ausgestaltet ist, das Ausgangssignal (S) des Corioliskreisels (1) zum definierten Zeitpunkt ($t_i$) zu ermitteln, und die Ausgabeeinheit (230) ausgestaltet ist, ein normiertes Ausgangssignal ($S_0$) des Corioliskreisels (1) durch Multiplikation des ermittelten Ausgangssignals (S) mit dem Quotienten aus der Amplitude ($A_0$) der Anregungsschwingung des Corioliskreisels (1) im eingeschwungenen Zustand und der ermittelten Amplitude (A) zu erzeugen; und

eine Vergleichseinheit (215), die ausgestaltet ist, die ermittelte Amplitude (A) mit einem vorgegebenen Wert zu vergleichen,
wobei
die Amplitude (A) der Anregungsschwingung des Corioliskreisels (1) kontinuierlich ermittelt wird und
der definierte Zeitpunkt ($t_i$) als erreicht definiert wird, wenn die ermittelte Amplitude (A) der Anregungsschwingung einen jeweils vorgegebenen Wert ($A_i$) erreicht hat.

**Claims**

1. A method for normalizing output signals of a Coriolis gyroscope (1) having a mass system (100) that can be excited to an excitation oscillation of the Coriolis gyroscope (1) parallel to a first axis (x), wherein a deflection of the mass system on account of a Coriolis force along a second axis (y), which is provided perpendicular to the first axis (x), can be verified using an output signal (S) of the Coriolis gyroscope (1), comprising:

determining the amplitude (A) of the excitation oscillation of the Coriolis gyroscope (1) at a defined time ($t_i$), determining the output signal (S) of the Coriolis gyroscope (1) at the defined time ($t_i$), and generating a normalized output signal ($S_0$) of the Coriolis gyroscope (1) by multiplying the determined output signal (S) by the quotient of the amplitude ($A_0$) of the excitation oscillation of the Coriolis gyroscope (1) in steady state and the determined amplitude (A), wherein the amplitude (A) of the excitation oscillation of the Coriolis gyroscope (1) is determined continuously, **characterized in that** the defined time ($t_i$) is defined as reached, when the determined amplitude (A) of the excitation oscillation has reached a respectively predetermined value ($A_i$).

2.  The method according to claim 1, further comprising repeating the steps for determining the amplitude (A), for determining the output signal (S), and for generating the normalized output signal ($S_0$) for at least one further defined time ($t_{i+1}$).

3.  The method according to claim 1, **characterized in that** the method is ended, when the determined amplitude (A) corresponds to the amplitude ($A_0$) of the excitation oscillation of the Coriolis gyroscope (1) in steady state.

4.  The method according to one of the preceding claims, **characterized in that** the method is ended after reaching a predetermined point in time ($t_n$).

5.  Coriolis gyroscope (1) comprising:

a mass system (100) that can be excited to an excitation oscillation of the Coriolis gyroscope (1) parallel to a first axis (x), wherein a deflection of the mass system on account of a Coriolis force along a second axis (y), which is provided perpendicular to the first axis (x), can be verified using an output signal (S) of the Coriolis gyroscope (1), a read-out device (200) that comprises a first detection unit (210), a second detection unit (220), and an output unit (230), wherein

the first detection unit (210) is adapted to determine the amplitude (A) of the excitation oscillation of the Coriolis gyroscope (1) at a defined time ($t_i$), the second detection unit (220) is adapted to determine the output signal (S) of the Coriolis gyroscope (1) at the defined time ($t_i$), and the output unit (230) is adapted to generate a normalized output signal ($S_0$) of the Coriolis gyroscope (1) by multiplying the determined output signal (S) by the quotient of the amplitude ($A_0$) of the excitation oscillation of the Coriolis gyroscope (1) in steady state and the determined amplitude (A); and

a comparison unit (215) that is adapted to compare the determined amplitude (A) with a predetermined value, wherein the amplitude (A) of the excitation oscillation of the Coriolis gyroscope (1) is determined continuously, and the defined time ($t_i$) is defined as reached, when the determined amplitude (A) of the excitation oscillation has reached a respectively predetermined value ($A_i$).

**Revendications**

1.  Procédé pour normaliser des signaux de sortie d'un gyroscope vibrant (1) avec un système de masse (100) qui est apte à être excité pour une oscillation d'excitation du gyroscope vibrant (1) parallèlement à un premier axe (x), dans lequel une déviation du système de masse en raison d'une force de Coriolis le long d'un deuxième axe (y) qui est prévu perpendiculairement au premier axe (x) est décelable à l'aide d'un signal de sortie (S) du gyroscope vibrant (1), comprenant :

la détermination de l'amplitude (A) de l'oscillation d'excitation du gyroscope vibrant (1) à un moment défini ($t_i$),
la détermination du signal de sortie normalisé (S) du gyroscope vibrant (1) au moment défini ($t_i$), et
la production d'un signal de sortie normalisé ($S_0$) du gyroscope vibrant (1) par multiplication du signal de sortie (S) déterminé par le quotient de l'amplitude ($A_0$) de l'oscillation d'excitation du gyroscope vibrant (1) en régime permanent et de l'amplitude (A) déterminée,
dans lequel
l'amplitude (A) de l'oscillation d'excitation du gyroscope vibrant (1) est déterminée de manière continue, **caractérisé en ce que**
le moment défini ($t_i$) est défini comme atteint quand l'amplitude (A) déterminée de l'oscillation d'excitation a atteint une valeur ($A_i$) prédéfinie respectivement.

2. Procédé selon la revendication comprenant par ailleurs
la répétition des étapes pour déterminer l'amplitude (A), pour déterminer le signal de sortie (S) et pour produire le signal de sortie normalisé ($S_0$) pour au moins un autre moment défini ($t_{i+1}$).

3. Procédé selon la revendication
**caractérisé en ce que**
le procédé est terminé quand l'amplitude (A) déterminée correspond à l'amplitude ($A_0$) de l'oscillation d'excitation du gyroscope vibrant (1) en régime permanent.

4. Procédé selon l'une des revendications précédentes,
**caractérisé en ce que**
le procédé est terminé une fois qu'un moment prédéfini ($t_n$) est atteint.

5. Gyroscope vibrant (1) comprenant :

un système de masse (100) qui est apte à être excité pour une oscillation d'excitation du gyroscope vibrant (1) parallèlement à un premier axe (x), dans lequel une déviation du système de masse en raison d'une force de Coriolis le long d'un deuxième axe (y) qui est prévu perpendiculairement au premier axe (x) est décelable à l'aide d'un signal de sortie (S) du gyroscope vibrant (1),
un dispositif de lecture (200) qui comprend une première unité de détection (210), une deuxième unité de détection (220) et une unité de sortie (230), dans lequel

la première unité de détection (210) est configurée pour déterminer l'amplitude (A) de l'oscillation d'excitation du gyroscope vibrant (1) à un moment défini ($t_i$),
la deuxième unité de détection (220) est configurée pour déterminer le signal de sortie (S) du gyroscope vibrant (1) au moment défini ($t_i$), et
l'unité de sortie (230) est configurée pour produire un signal de sortie normalisé ($S_0$) du gyroscope vibrant (1) par multiplication du signal de sortie (S) déterminé par le quotient de l'amplitude ($A_0$) de l'oscillation d'excitation du gyroscope vibrant (1) en régime permanent et de l'amplitude (A) déterminée, et

une unité de comparaison (215) qui est configurée pour comparer l'amplitude (A) déterminée à une valeur prédéfinie,
dans lequel
l'amplitude (A) de l'oscillation d'excitation du gyroscope vibrant (1) est déterminée de manière continue, et
le moment défini ($t_i$) est défini comme atteint quand l'amplitude (A) déterminée de l'oscillation d'excitation a atteint une valeur ($A_i$) prédéfinie respectivement.

## FIG. 1

Ermitteln der Amplitude der Anregungsschwingung für $t_i$ — S10

Ermitteln des Ausgangssignals für $t_i$ — S11

Erzeugen eines normierten Ausgangssignals für $t_i$ — S12

## FIG. 2

```
        ┌──────────┐
        │  i=1     │──── S20
        │  t=0     │
        └──────────┘
              │
              ▼
          ╱───────╲           nein
         ╱  t=t_i?  ╲ ──────────┐
         ╲         ╱            │
          ╲───────╱ ──── S21    │
              │                 │
              │ ja              │
              ▼                 │
  ┌────────────────────────┐    │
  │  Ermitteln von A(t_i)  │─ S22
  └────────────────────────┘    │
              │                 │
              ▼                 │
  ┌────────────────────────┐    │
  │  Ermitteln von S(t_i)  │─ S23
  └────────────────────────┘    │
              │                 │
              ▼                 │
  ┌────────────────────────┐    │
  │ Erzeugen von S_o(t_i)  │─ S24
  └────────────────────────┘    │
              │                 │
              ▼                 │
        ┌──────────┐            │
        │  i=i+1   │── S25       │
        └──────────┘            │
              │                 │
  nein        ▼                 │
  ┌───────╱───────╲             │
  │      ╱ i=n+1?  ╲            │
  │      ╲         ╱── S26      │
  │       ╲───────╱             │
              │ ja
              ▼
        ┌──────────┐
        │   End    │── S27
        └──────────┘
```

$t=t_i$?

Ermitteln von $A(t_i)$

Ermitteln von $S(t_i)$

Erzeugen von $S_o(t_i)$

$i=i+1$

$i=n+1$?

## FIG. 3

# FIG. 4

# FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2060871 A2
- US 2011179868 A1
- DE 102005034702 A1
- EP 2533011 A2